# EUROPÄISCHE PATENTSCHRIFT

(11) **EP 3 785 985 B1**
(45) Veröffentlichungstag und Bekanntmachung des Hinweises auf die Patenterteilung: **09.04.2025**
(21) Anmeldenummer: 20188903.7
(22) Anmeldetag: 31.07.2020
(51) Int. Cl.: B60N 2/815, B60N 2/844

(54) **BETÄTIGUNGSVORRICHTUNG FÜR EIN FAHRZEUGAUSSTATTUNGSTEIL UND AUSSTATTUNGSVORRICHTUNG MIT EINER BETÄTIGUNGSVORRICHTUNG**
ACTUATING DEVICE FOR A VEHICLE EQUIPMENT PART AND EQUIPMENT DEVICE WITH AN ACTUATING DEVICE
DISPOSITIF D'ACTIONNEMENT POUR UNE PARTIE D'ÉQUIPEMENT DE VÉHICULE ET DISPOSITIF D'ÉQUIPEMENT DOTÉ D'UN DISPOSITIF D'ACTIONNEMENT

(30) Priorität: 02.09.2019 DE 102019006162
(43) Veröffentlichungstag der Anmeldung: 03.03.2021
(73) Patentinhaber: GRAMMER AG, 92289 Ursensollen (DE)
(72) Erfinder: Körner, Robin, 08132 Mülsen (DE); Kober, Steve, 08233 Treuen (DE); Backmann-Klütsch, Mario, 04600 Altenburg (DE)
(74) Vertreter: Roche, von Westernhagen & Ehresmann

(56) Entgegenhaltungen:
- DE-B4- 10 393 647
- DE-U1- 202005 007 516
- DE-U1- 202009 016 091
- US-A1- 2014 203 615

## Beschreibung

Die Erfindung betrifft gemäß einem ersten Aspekt eine Fahrzeugausstattungsvorrichtung mit einer Verstelleinrichtung. Mit Fahrzeug ist im Sinne der Erfindung ein Land-, Luft- oder Wasserfahrzeug gemeint.

Die US 2014 / 0203615 A1 betrifft eine Kopfstütze mit einem Kopfteil, welches schwenkbar auf einem Tragstangenbügel gelagert ist. Mit dem Tragstangenbügel sind erste Verriegelungsmittel verbunden, welche mit zweiten Verriegelungsmitteln zusammenwirken, die dem Kopfteil zugeordnet sind.

Mittels eines Keils 102 können die ersten Verriegelungsmittel und die zweiten Verriegelungsmittel zwischen einer ersten Position und einer zweiten Position bewegt werden.

Die Betätigung erfolgt mittels eines Druckknopfes146, welcher mit dem Keil 102 zusammenwirkt. Eine Feder 138 belastet den Keil in die Ausgangsposition. Eine Feder 150 belastet den Druckknopf 146 in die Ausgangsposition. Die Feder 150 kann als "coil spring" ausgebildet sein .

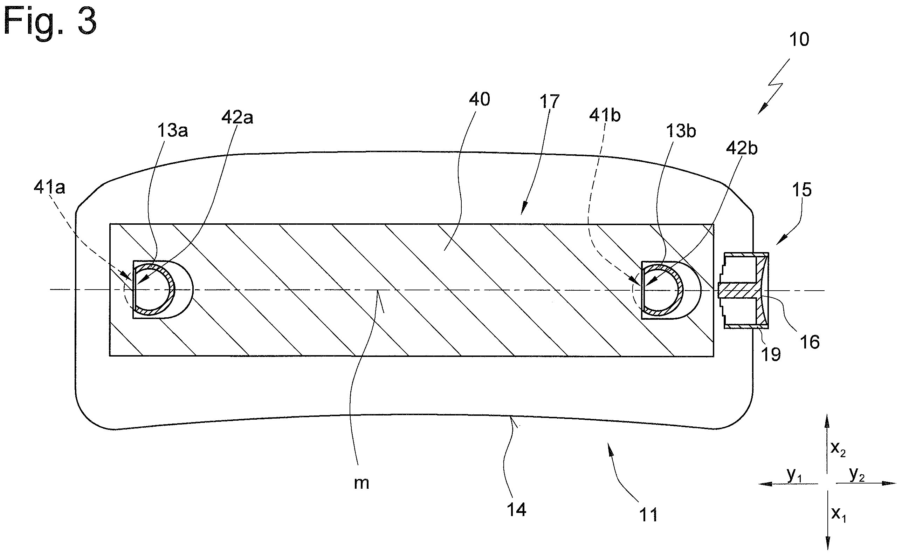

Die DE 103 93 647 B4 betrifft eine Sitzanordnung bei welcher ein schwenkbarer Betätigungshebel 114 mittels einer Spiralfeder 240 in eine neutrale Position vorgespannt ist. In Zusammenhang mit Fig. 3 wird deutlich, dass die Spiralfeder 2040 bei einer Betätigung des Betätigungshebels 114 durch Änderung der Wicklungsweite gespannt bzw. entspannt wird.

Die DE 20 2009 016 091 U1 betrifft eine Feder und einen Taster. Die Feder umfasst einen äußeren Bereich, einen inneren Bereich sowie einen federnden Bereich. Der federnde Bereich ist zwischen dem äußeren Bereich und dem inneren Bereich angeordnet. Der äußere Bereich dient der Verbindung mit einem Gehäuse. Der innere Bereich ist zur Verbindung mit einem Betätigungselement geeignet. Die Federauslenkung erfolgt z.B. durch Verschiebung des inneren Bereichs in z-Richtung, wobei der äußere Bereich in einer x- / y-Ebene liegt. Gemäß einer Ausführungsform umfasst ein Taster die Feder, das Gehäuse und das Betätigungselement. Der Taster kann in einem elektronischen Gerät verwendet werden.

Eine solche Betätigungsvorrichtung ist aus offenkundiger Vorbenutzung bekannt. Die Ausstattungsvorrichtung, z.B. eine Kopfstütze oder eine Armlehne eines Fahrzeugsitzes, umfasst eine Verstellvorrichtung, die zwischen einer ersten Position und einer zweiten Position verstellbar ist, um bestimmte Fahzeugfunktionen einzustellen, zu schalten oder zu steuern. Die Verstellung der Verstellvorrichtung erfolgt mit einer Betätigungsvorrichtung, die ein zwischen einer unbetätigten Position und einer betätigten Position verlagerbares Betätigungselement umfasst.

Das Betätigungselement wird im Stand der Technik von einer Rückstellvorrichtung in Form einer Schraubenfeder aus Metall, die koaxial zu einer Mittelachse der Verstellrichtungen ausgebildet ist, in die unbetätigte Position belastet.

Es war Aufgabe der Erfindung, eine Betätigunsvorrichtung zu schaffen, die vorteilhaft herstellbar ist, wenig Bauraum einnimmt und ein geringes Gewicht aufweist.

Die Aufgabe wurde gelöst mit einer Fahrzeugausstattungsvorrichtung gemäß den Merkmalen des Anspruchs 1.

Die Betätigungsvorrichtung umfasst ein Betätigungselement, welches relativ zu einem Rahmen zwischen einer unbetätigten Position und einer betätigten Position bewegbar ist. Das Betätigungselement ist z.B. eine Taste. Das Betätigungselement ist dafür geeignet unmittelbar oder mittelbar mit einer Verstellvorrichtung einer Ausstattungsvorrichtung eines Fahrzeuginnenraums in Verbindung gebracht zu werden, so dass mit der Betätigungsvorrichtung eine Funktion der Ausstattungsvorrichtung geschaltet oder gesteuert oder eingestellt werden kann, wenn die Betätigungsvorrichtung zwischen der unbetätigten Position und der betätigten Position bewegt wird. Z.B. kann wenigstens ein Teil der Verstellvorrichtung bewegt werden. Das Betätigungselement bewegt sich z.B. geradlinig axial zwischen der unbetätigten und der betätigten Position. Das Betätigungselement kann z.B. axial entlang der Mittelachse der Betätigungsvorrichtung bewegbar sein. Zwischen dem Betätigungselement und der Ausstattungsvorrichtung können Teile zwischengeschaltet sein, die mit dem Betätigungselement bewegungsverbunden sind aber eine andere Bewegung und / oder eine Bewegung in andere Richtungen durchführen.

Die Betätigungsvorrichtung umfasst eine Rückstellvorrichtung mit wenigstens einer Feder, zur Rückbelastung der Betätigungsvorrichtung in die unbetätigte Position. D.h., dass sich das Betätigungselement nach Entlastung z.B. automatisch in die unbetätigte Position zurückbewegt.

Wenigstens eine Feder der Rückstellvorrichtung ist als Spiralfeder ausgebildet und ist spiralförmig um eine Mittelachse gewunden. Die Mittelachse ist z.B. parallel zu den Verstellrichtungen des Betätigungselements angeodnet. Die Feder weist einen von der Mittelachse entfernt angeordneten äußeren Endbereich und einen bezüglich dem ersten Endbereich näher zu der Mittelachse angeordneten inneren Endbereich auf. Die Federauslenkung erfolgt durch eine Relativbewegung des inneren Endbereichs relativ zu dem äußeren Endbereich in Verstellrichtung parallel zu der Mittelachse der Feder. Die Feder erstreckt sich z.B. in einer Ebene, die im Wesentlichen rechtwinklig zu der Mittelachse ist.

Die Betätigungsvorrichtung weist den Vorteil auf, dass sie als Kunststoffspritzgießteil herstellbar ist. Die Vorrichtung verursacht ein geringes Gewicht und nimmt einen kleinen Bauraum in Anspruch. Die Betätigungsvorrichtung kann als Baugruppe mit wenigen Teilen oder einteilig hergestellt sein.

Gemäß einer Ausgestaltung der Erfindung ist das Betätigungselement mit dem inneren Endbereich oder mit dem äußeren Endbereich verbunden und der jeweils andere Endbereich ist mit der Ausstattungsvorrichtung, z.B. einem Gehäuse der Ausstattungsvorrichtung, verbunden. Z.B. ist das Betätigungselement mit dem inneren Endbereich verbunden und der äußere Endbereich ist an der Ausstattungsvorrichtung unmittelbar oder mittelbar gehalten. Gemäß einer Alternative ist das Betätigungselement mit dem äußeren Endbereich verbunden und der innere Endbereich ist an der Ausstattungsvorrichtung gehalten. Ein Endbereich ist somit fest an der Ausstattungsvorrichtung gehalten und mittels dem Betätigungselement kann der andere Endbereich relativ zu dem einen Endbereich ausgelenkt werden. Der ausgelenkte Endbereich der Feder oder ein Bereich des Betätigungselements ist derart mit wenigstens einem Teil der Ausstattungsvorrichtung verbindbar, dass dieses zwischen einer ersten Position und einer zweiten Position bewegt wird, wenn die Betätigungsvorrichtung zwischen der unbetätigten Position und der betätigten Position bewegt wird.

Beispielsweise umfasst die Betätigungsvorrichtung einen Rahmen, welcher zur Befestigung an der Ausstattungsvorrichtung ausgebildet ist, wobei das Betätigungselement bei der Bewegung zwischen der unbetätigten Position und der betätigten Position relativ zu dem Rahmen bewegbar ist. Auf diese Weise kann die Betätigungsvorrichtung vollständig vormontiert werden und als Baugruppe an der Ausstattungsvorrichtung angebracht und mit wenigstens einem anderen Teil der Ausstattungsvorrichtung verbunden werden.

Der Rahmen umfasst z.B. erste Führungsmittel und das Betätigungselement zweite Führungsmittel, die während der Bewegung des Betätigungselements zwischen der unbetätigten Position und der betätigten Position zusammenwirken, um die Bewegung des Betätigungselements zu führen. Die einen Führungsmittel sind z.B. von Nuten und die anderen Führungsmittel von Vorsprüngen gebildet, die in den Nuten gleiten und dabei das Betätigungselement zwischen der unbetätigten Position und der betätigten Position an dem Rahmen führen. So wird das Betätigungselement bei der Bewegung geführt und verkantet nicht.

Der äußere Endbereich der Spiralfeder bildet z.B. einen Ring, der an dem Rahmen befestigbar ist. Vorteilhaft ist es, wenn der Ring die gleiche Querschnittsform zu der Mittelachse aufweist, wie der Rahmen. Z.B. sind der Rahmen und der äußere Endbereich komplementär im Querschnitt kreisringförmig oder bilden einen rechteckigen Ring. Dann kann die Feder in einem Innenraum des Rahmens gelagert werden. Alternativ kann der Endbereich aber auch eine andere Querschnittsform aufweisen.

Der Rahmen umfasst z.B. Befestigungsmittel, welche mit Gegenbefestigungsmitteln des Rings der Spiralfeder in Eingriff bringbar sind. Die einen Befestigungsmittel können z.B. von Vorsprüngen und die anderen Befestigungsmittel von Aussparungen gebildet sein. Die Vorsprünge sind z.B. mit Montageschrägen versehen, welche eine elastische Verformung der mit Übermaß bezüglich des Rahmens an dem äußeren Federende angeordneten Vorsprünge begünstigen, so dass diese in die Aussparungen einrasten, wenn sich die Positionen der Vorsprünge und die der Aussparungen decken.

Das Betätigungselement ist, wenn nicht unmittelbar, mittelbar mittels einer Verbindung mit dem ersten Endbereich oder mit dem zweiten Endbereich der Feder verbunden. Eine Distanz zwischen dem Ort der Feder und dem Ort des Betätigungselements in der unbetätigten Position kann auf diese Weise überbrückt werden und eine Bewegungsverbindung geschaffen werden. Die Verbindung kann z.B. im einfachsten Fall von einem Steg gebildet sein. Der Steg kann z.B. U-förmig ausgebildet sein, was ihm eine hohe Stabilität verleiht.

Der Rahmen ist z.B. hülsenförmig ausgebildet. Er kann z.B. etwa zylindrisch, z.B. kreiszylindrisch, gestaltet sein. Er kann z.B. eine die Mantelfläche ausbildende Wand sowie an gegenüberliegenden Austrittsstellen einer Längsmittelachse der Hülse Öffnungen aufweisen. Durch eine der Öffnungen kann eine Betätigung des Betätigungselements erfolgen und durch die andere Öffnung eine Betätigung der Verstellvorrichtung der Ausstattungsvorrichtung vorgenommen werden.

Der Rahmen ist z.B. am Umfang im Wesentlichen geschlossen ausgebildet. Wenn der Rahmen z.B. hülsenförmig ausgebildet ist, kann z.B. die Mantelfläche im Wesentlichen geschlossen geformt sein. Auf diese Weise wird verhindert, dass die Funktion der Betätigungsvorrichtung durch Verschmutzung beeinträchtigt wird.

Der Rahmen bildet z.B. eine Anschlagfläche aus, welche mit einer Kontaktfläche des Betätigungselements zusammenwirkt, um die Bewegung des Betätigungselements in eine Verstellrichtung zu begrenzen. Wenn ein Federende an dem Rahmen befestigt ist, kann z.B. die Kontaktfläche des Betätigungselements von dem anderen Federende gegen die Anschlagfläche belastet sein. Dies kann z.B. auch eine Geräuschentwicklung aufgrund einer Vibration oder durch Klappern des Betätigungselements verhindern.

Die Anschlagfläche und die Kontaktfläche sind z.B. schräg, insbesondere in einem 45 Grad Winkel, ausgebildet, um die Taste an dem Rahmen zu zentrieren. Da das Betätigungselement in dem Rahmen mit Spiel gelagert sein muss, könnte es in der unbetätigten Position des Betätigungselements zu unterschiedlichen Positionen oder zu einer Relativbewegung zwischen dem Betätigungselement und dem Rahmen in radialer Richtung zur Mittelachse kommen. Mittels der Schräge wird das Betätigungselement an dem Rahmen in der unbetätigten Position zentriert, d.h. es hat eine definierte Position. Das vermeidet Geräusche und vermittelt dem Benutzer einen qualitativ hochwertigeren Eindruck.

Die Spiralfeder ist z.B. in der unbetätigten Position mit einer Vorspannung versehen. Mit dieser Ausführungsform wird gewährleistet, dass es nicht in eine Richtung parallel zu der Mittelachse zu einer Relativbewegung zwischen dem Betätigungselement und dem Rahmen in der unbetätigten Position kommen kann. Aufgrund der Vorspannung wird die Kontaktfläche von der Feder mit der Vorspannkraft gegen die Anschlagfläche gedrückt. Klappergeräusche werden auf diese Weise vermieden.

Das Betätigungselement ist z.B. einteilig mit der Spiralfeder ausgebildet. Das Betätigungselement, die Spiralfeder und ggf. die Verbindung können einfach hergestellt und montiert werden, wenn sie einteilig ausgebildet sind. Z.B. sind Betätigungselement, Spiralfeder und ggf. die Verbindung einteilig aus einem Kunststoff im Spritzgießverfahren geformt. Damit sind eine einfache Herstellung und ein niedriges Gewicht gewährleistet.

Die Betätigungsvorrichtung ist z.B. von einem Kunststoff gebildet. Der Rahmen sowie die Spiralfeder, das Betätigungselement und ggf. die Verbindung können aus Kunststoff hergestellt sein, mit dem Vorteil einer einfachen Herstellung und eines niedrigen Gewichts.

Eine solche Ausstattungsvorrichtung kann z.B. eine Kopfstütze oder eine Armlehne sein.

Eine Kopfstütze ist beispielsweise aus der DE 10 2015 011 477 A1 der Anmelderin bekannt.

Es war Aufgabe der Erfindung, eine Ausstattungsvorrichtung mit einer Betätigungsvorrichtung zur Betätigung einer Verstellvorrichtung der Ausstattungsvorrichtung zu schaffen, bei welcher die Betätigungsvorrichtung vorteilhaft herstellbar ist und wenig Bauraum innerhalb der Kopfstütze einnimmt sowie wenig Gewicht aufweist.

Die Ausstattungsvorrichtung umfasst eine Verstellvorrichtung, welche wenigstens ein bewegbares Teil umfasst. Die Verstellvorrichtung kann zwischen einer ersten Position und einer zweiten Position verstellt werden. Die Ausstattungsvorrichtung umfasst ferner eine Betätigungsvorrichtung zur Betätigung der Verstellvorrichtung. Bei einer Bewegung der Betätigungsvorrichtung von der unbetätigten Position in die betätigte Position wird die Verstellvorrichtung von der ersten Position in die zweite Position verstellt. Die Bewegung der Verstellvorrichtung in die zweite Position erfolgt durch Bewegungsverbindung zwischen der Betätigungsvorrichtung und der Verstellvorrichtung.

Bei einer Bewegung der Betätigungsvorrichtung von der betätigten Position in die unbetätigte Position wird die Verstellvorrichtung z.B. von der zweiten Position in die erste Position bewegt. Diese Bewegung der Verstellvorrichtung in die erste Position kann durch eine Bewegungsverbindung zwischen der Betätigungsvorrichtung und der Verstellvorrichtung oder durch ein separates Rückstellelement der Verstellvorrichtung erfolgen, welches bei der Bewegung in die zweite Position gespannt wurde.

Die Betätigungsvorrichtung ist gemäß dem ersten Aspekt der Erfindung ausgebildet. Es wird hier - um Wiederholungen zu vermeiden - nicht noch einmal auf die Eigenschaften und Vorteile der Betätigungsvorrichtung eingegangen.

Z.B. kann die Ausstattungsvorrichtung eine Kopfstütze für Fahrzeugsitze sein. Die Kopfstütze ist als Widerlager für den Kopf des Fahrzeuginsassen vorgesehen.

Die Kopfstütze umfasst ein Kopfanlageteil, welches mittels einer Haltevorrichtung der Kopfstütze an dem Fahrzeugsitz gelagert werden kann. Die Haltevorrichtung kann z.B. zwei Einzeltragstangen oder einen Tragstangenbügel aufweisen. Alternativ kann die Haltevorrichtung z.B. auch anders ausgebildet sein. Bei einem Integralsitz ist z.B. das Kopfanlageteil nicht vertikal verstellbar relativ zu dem Fahrzeugsitz. Für eine solche Kopfstütze kann die Haltevorrichtung anders ausgebildet sein.

Das Kopfanlageteil ist z.B. relativ zu dem Fahrzeugsitz, insbesondere relativ zu der Rückenlehne des Fahrzeugsitzes, vertikal und / oder horizontal und / oder bzgl. seiner Neigung verstellbar. Hierfür umfasst die Verstellvorrichtung Führungen, welche die Verstellbarkeit gewährleisten.

Die Kopfstütze umfasst eine Verstellvorrichtung, die zwischen einer ersten Position und einer zweiten Position verstellbar ist. Die Verstellvorrichtung kann z.B. mit einer Verriegelungsvorrichtung zusammenwirken oder Teil dieser Verriegelungsvorrichtung sein. Die Verriegelungsvorrichtung ist zwischen einer Riegelposition und einer Löseposition bewegbar. Mit einer Betätigungsvorrichtung, die ein Betätigungselement umfasst, kann die Verriegelungsvorrichtung vom Benutzer von außen an der Kopfstütze zwischen der Riegelposition und der Löseposition bewegt werden. In einer unbetätigten Position der Betätigungsvorrichtung befindet sich die Verriegelungsvorrichtung in der Riegelposition und in einer betätigten Position der Betätigungsvorrichtung befindet sich die Verriegelungsvorrichtung in der Löseposition.

Die Verriegelungsvorrichtung ist z.B. zur Verriegelung der Vertikalposition und / oder der Horizontalposition und / oder der Neigeposition des Kopfanlageteils ausgebildet. Das Betätigungselement ist von einer Feder in die unbetätigte Position belastet. Die Verriegelungsvorrichtung umfasst erste Verriegelungsmittel, die dem Kopfanlageteil zugeordnet sind und zweite Verriegelungsmittel, die der Haltevorrichtung oder einem Basisteil der Kopfstütze zugeordnet sind, zu welchem das Kopfanlageteil relativbewegbar ist. In letzterem Fall ist das Basisteil der Kopfstütze an der Haltevorrichtung gelagert und das Kopfanlageteil an dem Basisteil.

Die Betätigungsvorrichtung der Kopfstütze ist z.B. bei dieser Ausführungsform des Ausstattungsteils gemäß dem ersten Erfindungsaspekt ausgebildet.

Weitere Vorteile ergeben sich anhand der nachfolgenden Beschreibung eines in den schematischen Zeichnungen dargestellten Ausführungsbeispiels, welches in der nachfolgenden Figurenbeschreibung, auch unter Bezugnahme auf die schematischen Zeichnungen, beispielhaft beschrieben ist. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug auf ein Ausführungsbeispiel beschrieben, dargestellt oder offenbart sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zitierten Druckschriften und der beschriebenen Vorrichtungen des Standes der Technik inhaltlich vollumfänglich mit einbezogen, auch zu dem Zweck, einzelne oder mehrere Merkmale der dort offenbarten Gegenstände in einen oder in mehrere Ansprüche der vorliegenden Anmeldung mit aufzunehmen. Auch solche geänderten Ausführungsbeispiele sind - auch wenn sie in den Zeichnungen nicht dargestellt sind - von der Erfindung mit umfasst.

Es zeigen :
Fig. 1 eine perspektivische Ansicht einer Ausstattungsvorrichtung in Form einer Kopfstütze mit einer Verriegelungsvorrichtung zur Verriegelung der eingestellten Vertikalposition, wobei die Verriegelungsvorrichtung eine Verstellvorrichtung im Sinne der Erfindung ist,
Fig. 2 eine Frontansicht der Kopfstütze,
Fig. 3 eine Schnittdarstellung gemäß Schnittlinie A - A in Fig. 2,
Fig. 4 eine Ansicht der Kopfstütze gemäß Ansichtspfeil B in Fig. 2,
Fig. 5 eine perspektivische Darstellung einer Betätigungsvorrichtung der Kopfstütze zum Betätigen der Verriegelungsvorrichtung, wobei die Betätigungsvorrichtung in der unbetätigten Positioni angeordnet ist,
Fig. 6 eine Seitenansicht der Betätigungsvorrichtung gemäß Fig. 5,
Fig. 7 eine Ansicht gemäß Ansichtspfeil C in Fig. 6,
Fig. 8 eine Ansicht gemäß Ansichtspfeil D in Fig. 6,
Fig. 9a eine Schnittdarstellung gemäß Schnittlinie F - F in Fig. 7,
Fig. 9b in Anlehnung an Fig. 9a die Betätigungsvorrichtung in der betätigten Position,
Fig. 10 eine perspektivische Darstellung eines Rahmens der Betätigungsvorrichtung als Einzelteil,
Fig. 11 eine Seitenansicht des Rahmens gemäß Fig. 10,
Fig. 12 eine Ansicht gemäß Ansichtspfeil G in Fig. 11,
Fig. 13 eine Ansicht gemäß Ansichtspfeil H in Fig. 11,
Fig. 14 eine perspektivische Darstellung einer Betätigungseinheit aufweisend ein Betätigungselement, eine Verbindung und eine Feder der Betätigungsvorrichtung,
Fig. 15 eine Seitenansicht der Betätigungseinheit gemäß Fig. 14,
Fig. 16 eine Ansicht gemäß Ansichtspfeil I in Fig. 15, und
Fig. 17 eine Ansicht gemäß Ansichtspfeil J in Fig. 15.

Eine Kopfstütze insgesamt ist in den Fig. mit dem Bezugszeichen 10 bezeichnet. Die Kopfstütze ist eine Ausstattungsvorrichtung im Sinne der Erfindung.

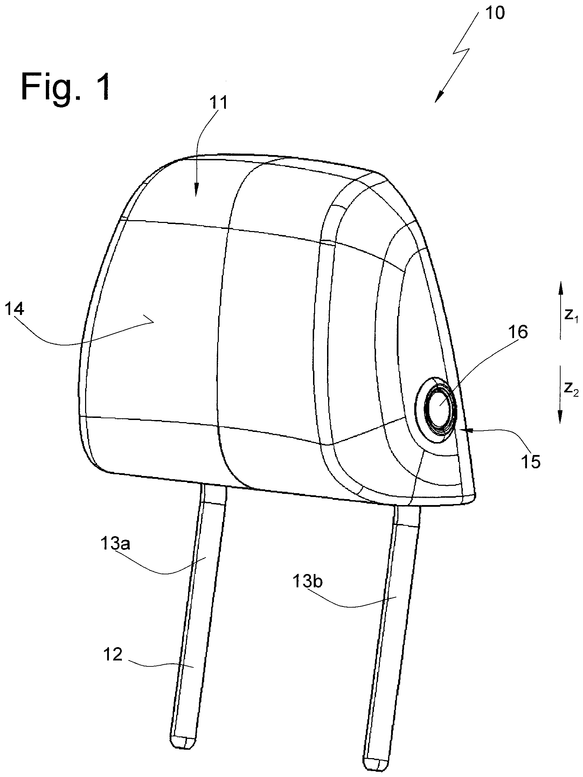

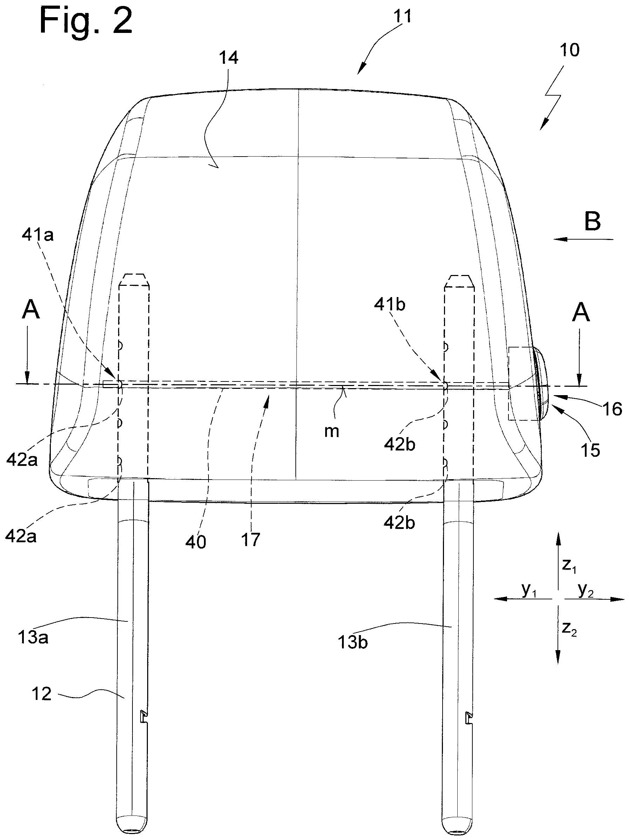

Die Kopfstütze 10 umfasst gemäß der Fig. 1 und 2 ein Kopfanlageteil 11 und eine Haltevorrichtung 12. Mit der Haltevorrichtung 12 kann das Kopfanlageteil 11 in bekannter Weise an einem hier nicht dargestellten Fahrzeugsitz gelagert werden. Es dient als Widerlager für den Kopf des Fahrzeuginsassen und kann auf eine Kopfanlagefläche 14 wirkende Kräfte auf den Fahrzeugsitz übertragen. Die in Bezug auf einen Insassen, dessen Kopf von der Kopfstütze 10 abgestützt werden soll, nach vorne weisende Richtung ist mit x1 und die entgegengesetzte, nach hinten weisende Richtung mit x2 bezeichnet.

Die Haltevorrichtung umfasst Tragstangen 13a und 13b, die in Aufnahmen des Fahrzeugsitzes gelagert sind. Das Kopfanlageteil 11 ist relativ zu den Tragstangen 13a und 13b in die Richtungen z1 und z2 verstellbar an den Tragstangen 13a und 13b gelagert. Um das Kopfanlageteil 11 in der eingestellten Höhenposition zu verriegeln, weist die Kopfstütze 10 eine Verriegelungsvorrichtung 17 auf (siehe Fig. 2). Die Verriegelungsvorrichtung 17 ist eine Verstellvorrichtung im Sinne der Erfindung. Die Verriegelungsvorrichtung 17 umfasst erste Verriegelungselemente 41a und 41b (siehe Fig. 2), des Kopfanlageteils 11 die mit zweiten Verriegelungselementen 42a und 42b der Haltevorrichtung 12 zusammenwirken, um das Kopfanlageteil 11 lösbar zu verriegeln.

Die ersten Verriegelungselemente 41a und 41b haben im vorliegenden Ausführungsbeispiel die Form von Riegelkanten, die einem Schieber 40 zugeordnet sind. Die Riegelkanten sind in dem Beispiel einteilig mit dem Schieber 40 geformt. Die zweiten Verriegelungselemente 42a und 42b weisen im vorliegenden Ausführungsbeispiel die Form von Aussparungen in jeder der Tragstangen 13a und 13b auf. Wenn das Verriegelungselement 41a mit dem Verriegelungselement 42a und das Verriegelungselement 41b mit dem Verriegelungselement 42b in Eingriff ist, ist eine Vertikalverstellung verriegelt, also nicht möglich. Werden die Verriegelungselemente 41a und 42a sowie 41b und 42b außer Eingriff bewegt, ist eine Vertikalverstellung möglich.

Die Verriegelungsvorrichtung 17 ist zwischen einer Riegelposition und einer Löseposition bewegbar. In der Riegelposition sind die Verriegelungsmittel in Eingriff und das Kopfanlageteil 11 ist relativ zu den Tragstangen 13a und 13b in die Richtungen z1 und z2 unbewegbar verriegelt. Gemäß einer Alternative könnte das Kopfanlageteil 11 in der Riegelposition trotz des Eingriffs der Verriegelungselemente in die Richtung z2 unbewegbar und in die Richtung z1 bewegbar sein. In der Löseposition ist das Kopfanlageteil 11 in die Richtungen z1 und z2 bewegbar. Die Verriegelungsvorrichtung 17 ist von einer Rückstellvorrichtung in die Riegelposition belastet.

Mit einer Betätigungsvorrichtung 15, die eine Mittelachse m aufweist, kann die Verriegelungsvorrichtung 17 aus der Riegelposition in die Löseposition verstellt werden, in welcher die Verriegelungselemente 41a, 41b, 42a und 42b außer Eingriff sind. Die Betätigungsvorrichtung 15 umfasst ein Betätigungselement 16. In der unbetätigten Position der Betätigungsvorrichtung 15 befindet sich die Verriegelungsvorrichtung 17 in der Riegelposition und in der betätigten Position des Betätigungselements 16 befindet sich die Verriegelungsvorrichtung 17 in der Löseposition. Die Betätigungsvorrichtung 15 umfasst eine Feder 18, mit welcher das Betätigungselement 16 in die unbetätigte Position belastet wird. Die Feder 18 ist als Spiralfeder ausgebildet.

In der betätigten Position ist das Betätigungselement 16 aufgrund der Betätigung eines Benutzers bezüglich der unbetätigten Position in Richtung y1 verlagert und in der unbetätigten Position ist das Betätigungselement 16 aufgrund der Rückstellkraft der Feder 18 bezüglich der betätigten Position in Richtung y2 verlagert.

Entgegen der Darstellung in Fig. 3 steht der Schieber mit der Betätigungsvorrichtung derart in Verbindung, dass bei der Bewegung des Betätigungselements 16 von der unbetätigten Position in die betätigte Position bezüglich eines Rahmens 19 der Betätigungsvorrichtung 15 der fest an einem relativ zu den Tragstangen 13a und 13b unbeweglichen Kopfkasten der Kopfstütze 10 gehalten ist, der Schieber 40 ebenfalls in Richtung y1 bewegt wird, wobei die Verriegelungselemente 41a und 42a sowie 41b und 42b außer Eingriff geraten. Wird das Betätigungselement 16 entlastet, wird der Schieber 40, der von einer nicht dargestellten Feder in Richtung y2 belastet ist, wieder in Richtung y2 in die Position gemäß Fig. 3 bewegt, wobei die Verriegelungselemente 41a und 42a sowie 41b und 42b sich in Eingriff bewegen. Das Betätigungselement 16 wird von der Feder 18 in die unbetätigte Position bewegt.

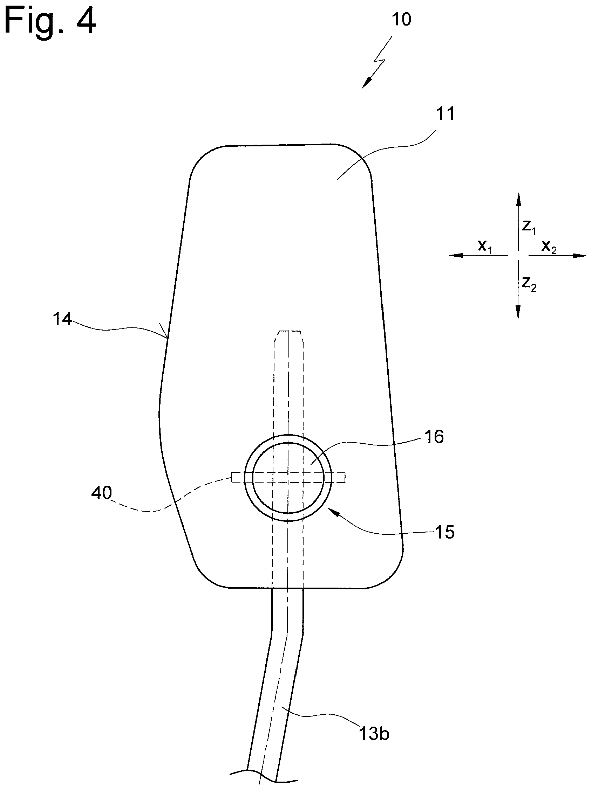

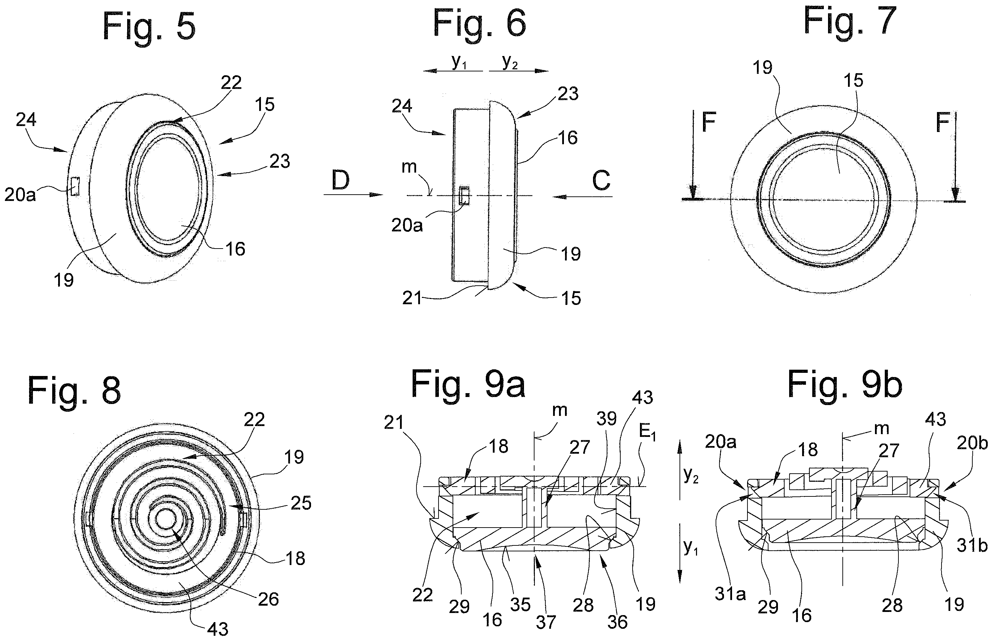

Fig. 4 zeigt eine Seitenansicht der Kopfstütze 10, wobei die Teile, die in Fig. 3 verdeckt sind, gestrichelt dargestellt sind. Die Betätigungsvorrichtung 15 ist in den Fig. 5 bis 9 als Baugruppe dargestellt.

Gemäß Fig. 5 umfasst die Betätigungsvorrichtung 15 den Rahmen 19, der im vorliegenden Ausführungsbeispiel als in Umfangsrichtung im Wesentlichen geschlossene Hülse ausgebildet ist, die an einem Endbereich 23 einen Kragen bildet und bezüglich der Mittelachse m an beiden Endbereichen 23 und 24 mit Öffnungen versehen ist. Der Rahmen 19 könnte aber auch eine andere Gestalt haben, z.B. könnte er als Gerüst aus bloßen Führungsleisten gebildet sein. Der Rahmen könnte alternativ auch an einer festen Struktur des Ausstattungsteils ausgebildet sein, wie z.B. an dem Kopfkasten der Kopfstütze 10. In diesem Fall kann er mit denselben Merkmalen versehen sein, wie der in diesem Ausführungsbeispiel beschriebene Rahmen.

Der Rahmen 19 ist mit gegenüberliegenden Befestigungsmitteln 20a und 20b - hier in Form von Aussparungen - versehen, die weiter unten erläutert werden. Der Rahmen 19 bildet eine Schulter 21, die als Anschlag für die Montage an dem Kopfanlageteil 13 dient.

Der Rahmen 19 bildet einen im vorliegenden Ausführungsbeispiel etwa kreiszylindrischen Innenraum 22. Das Betätigungselement 16 ist in dem Innenraum 22 des Rahmens 19 zwischen der unbetätigten Position und der betätigten Position bewegbar geführt siehe die Fig. 9a und 9b. An dem Endbereich 23 des Rahmens 19 ist das Betätigungselement 16 betätigbar in dem Innenraum 22 angeordnet. Eine Betätigungsfläche 35 des Betätigungselements 16 umfasst einen Randbereich 36, der radial von der Mittelachse m entfernt ist und einen Zentralbereich 37, der nahe an der Mittelachse angeordnet ist. Der Zentralbereich 37 ist bezüglich des Randbereichs 36 in Richtung y1 zurückversetzt ausgebildet. Von dem Randbereich 36 geht die Betätigungsfläche 35 sanft in den Zentralbereich 37 über, so dass eine Mulde gebildet ist, was aus haptischen Gründen vorteilhaft ist.

An einem dem Endbereich 23 gegenüber liegenden Endbereich 24 des Innenraums 22 ist die Feder 18 angeordnet. Wie in Fig. 7 zu erkennen, sind das Betätigungselement 16 und die Feder 18 koaxial zu der Mittelachse m ausgebildet.

Die Feder 18 erstreckt sich spiralförmig im Wesentlichen innerhalb einer Ebene E1, die etwa rechtwinklig zu der Mittelachse m verläuft. Gemäß Fig. 8 umfasst die Feder einen äußeren Endbereich 25 sowie einen inneren Endbereich 26. Der äußere Endbereich 25 ist an dem Rahmen 19 befestigt, so dass es weder um die Mittelachse drehbar, noch in Richtung y1 und y2 bewegbar ist.

Gemäß Fig. 9 ist der innere Endbereich 26 mit einer Verbindung 27 in Form eines im Querschnitt zu der Mittelachse U-förmigen Stegs mit dem Betätigungselement 16 verbunden. Wie in Fig. 7 zu erkennen ist, weist der Rahmen 19 zu der Mittelachse m wenigstens eine etwa um 45 Grad geneigte Anschlagfläche 28 auf, die mit wenigstens einer komplementär ausgebildeten Kontaktfläche 29 derart zusammenwirkt, dass sie einen Anschlag für das Betätigungselement 16 bildet und diese in der unbetätigten Position zentriert.

In Fig. 9a ist die unbetätigte Position der Betätigungsvorrichtung 15 und in Fig. 9b die betätigte Position dargestellt.

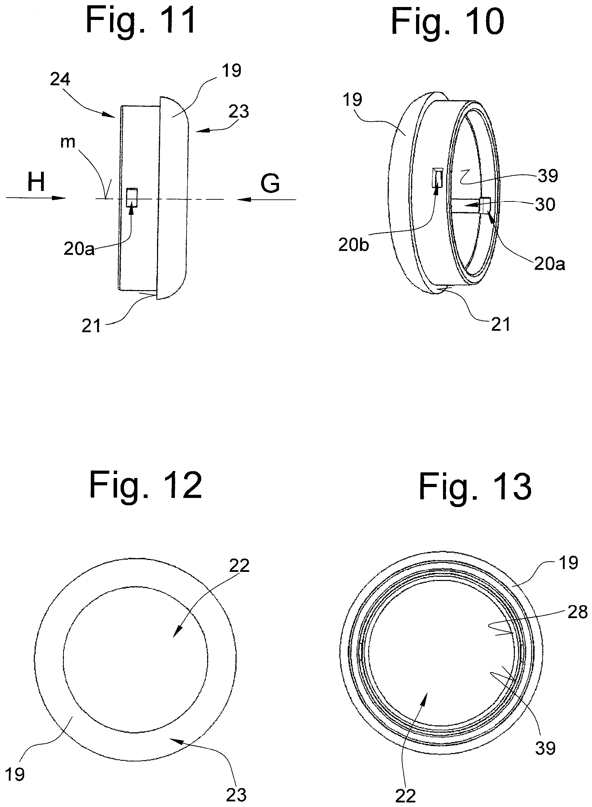

Gemäß der Fig. 10 bis 13 ist der Rahmen 19 als Einzelteil dargestellt. Er umfasst die sich diametral gegenüber liegenden Befestigungsmittel 20a und 20b sowie vier sich parallel zu der Mittelachse m erstreckende und über den Innenumfang einer Oberfläche 39 des Innenraums 22 verteilte erste Führungsmittel 30 in Form von sich bezüglich der Mittelachse m gegenüberliegender Nuten, von denen lediglich eine Nut in Fig. 10 erkennbar ist.

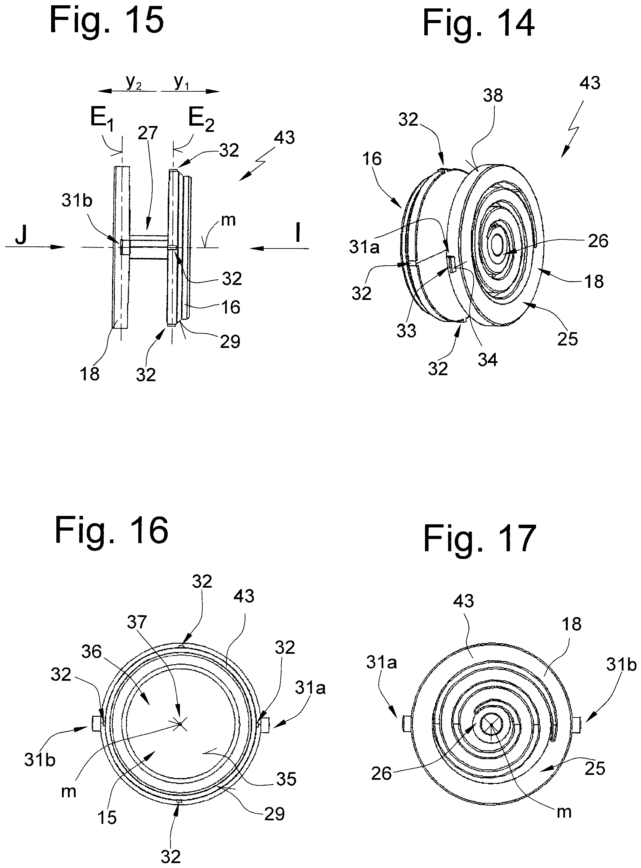

In den Fig. 14 bis 17 ist die Betätigungseinheit, umfassend Betätigungselement 16, Verbindung 27 und Feder 18, dargestellt. Der ringförmige äußere Endbereich 25 weist eine radial gerichtete Flankenfläche 38 auf, von der bezüglich der Mittelachse m diametral gegenüberliegend die Befestigungsmittel 31a und 31b - jedes in Form eines Vorsprungs - vorragen. Jeder Vorsprung weist eine zu der Mittelachse m schräg ausgebildete Schrägfläche 33 und eine zu der Mittelachse m etwa rechtwinklig ausgebildete Haltefläche 34 auf.

Das Betätigungselement 16 erstreckt sich innerhalb einer Ebene E2 und umfasst radial bezüglich der Mittelachse m nach außen vorragend vier über den Umfang verteilte Führungsmittel 32, die mit den Führungsmitteln 30 bei der Bewegung zwischen der unbetätigten Position und der betätigten Position gleitend zusammenwirken und das Betätigungselement 16 führen.

Die Verbindung 27 erstreckt sich in die Richtungen y1 und y2 zwischen dem Betätigungselement 16 und der Feder 18. Die Verbindung 27 ist im Querschnitt zu der Mittelachse m U-förmig ausgebildet. Von der Verbindung erstreckt sich die Feder 18 etwa rechtwinklig zu der Mittelachse m in einer Ebene E1 und das Betätigungselement 16 erstreckt sich etwa rechtwinklig zu der Mittelachse m in einer Ebene E2. Die Ebene E2 ist parallel zu der Ebene E1.

Die Feder 18, die Verbindung 27 und das Betätigungselement 16 bilden die Betätigungseinheit 43, die einteilig im Kunststoffspritzgussverfahren hergestellt ist. Alternativ können die Feder 18, die Verbindung 27 und das Betätigungselement 16 aber auch als Baugruppe von miteinander verbundenen Einzelteilen hergestellt sein. Die Betätigungseinheit 43 ist z.B. aus einem Kunststoff, insbesondere einem glasfaserverstärktem Kunststoff hergestellt. Bei dem Kunststoff handelt es sich z.B. um Polypropylen oder um Polyamid oder z.B. um einen Polycarbonat / Acrylnitril-Butadien-Styrol-Blend.

## Patentansprüche

1. Fahrzeugausstattungsvorrichtung des Fahrzeuginnenraums mit einer Verstelleinrichtung, die mittels einer Betätigungsvorrichtung (15) zur Betätigung der Verstelleinrichtung der Fahrzeugausstattungsvorrichtung zwischen wenigstens einer ersten Position und einer zweiten Position bewegbar ist, mit einem Betätigungselement, welches relativ zu einem Gehäuse zwischen einer unbetätigten Position und einer betätigten Position in entgegengesetzte Verstellrichtungen (y1, y2) bewegbar ist und mittels einer Rückstellvorrichtung in die unbetätigte Position belastet ist, wobei mit dem Betätigungselement ein mit dem Betätigungselement zusammenwirkendes Element der Fahrzeugausstattungsvorrichtung verlagerbar ist, **dadurch gekennzeichnet, dass** die Rückstellvorrichtung wenigstens eine als Spiralfeder ausgebildete Feder (18) mit einem äußeren Endbereich (25) und einem inneren Endbereich (26) umfasst, und dass die Feder (18) spiralförmig um eine parallel zu den Verstellrichtungen (y1, y2) ausgebildete Mittelachse (m) innerhalb einer etwa rechtwinklig zu der Mittelachse (m) ausgebildeten Ebene (E1) angeordnet ist, wobei die Federauslenkung durch eine Relativbewegung des inneren Endbereichs (26) relativ zu dem äußeren Endbereich (25) in Verstellrichtung parallel zu der Mittelachse (m) erfolgt.

2. Fahrzeugausstattungsvorrichtung nach Anspruch 1, **dadurch gekennzeichnet, dass** das Betätigungselement (16) mit dem äußeren Endbereich (25) oder mit dem inneren Endbereich (26) verbunden ist und der jeweils andere Endbereich mit der Ausstattungsvorrichtung verbindbar ist.

3. Fahrzeugausstattungsvorrichtung nach einem der vorangehenden Ansprüche, **dadurch gekennzeichnet, dass** die Betätigungsvorrichtung (15) einen Rahmen (19) aufweist, welcher an der Ausstattungsvorrichtung (11) befestigbar ist, wobei das Betätigungselement (16) bei der Bewegung zwischen der unbetätigten Position und der betätigten Position relativ zu dem Rahmen (19) bewegbar ist.

4. Fahrzeugausstattungsvorrichtung nach Anspruch 3, **dadurch gekennzeichnet, dass** der Rahmen (19) erste Führungsmittel (32a) und das Betätigungselement (16) zweite Führungsmittel (32b) umfasst, die während der Bewegung zwischen der unbetätigten Position und der betätigten Position zusammenwirken, um die Bewegung des Betätigungselements (16) zu führen.

5. Fahrzeugausstattungsvorrichtung nach Anspruch 3 oder 4, **dadurch gekennzeichnet, dass** der äußere Endbereich (25) einen Ring bildet, der an dem Rahmen (19) befestigbar ist.

6. Fahrzeugausstattungsvorrichtung nach einem der Ansprüche 3 bis 5, **dadurch gekennzeichnet, dass** der äußere Endbereich (25) Befestigungsmittel (31a) umfasst, welche mit Gegenbefestigungsmitteln (31b) des Rahmens (19) in Eingriff bringbar sind.

7. Fahrzeugausstattungsvorrichtung nach einem der Ansprüche 3 bis 6, **dadurch gekennzeichnet, dass** der Rahmen (19) hülsenförmig ausgebildet ist.

8. Fahrzeugausstattungsvorrichtung nach Anspruch 7, **dadurch gekennzeichnet, dass** der Rahmen (19) gehäuseartig über den Umfang einer Hülsenwand im Wesentlichen geschlossen ausgebildet ist.

9. Fahrzeugausstattungsvorrichtung nach einem der Ansprüche 3 bis 8, **dadurch gekennzeichnet, dass** der Rahmen (19) eine Anschlagfläche (28) ausbildet, welche mit einer Kontaktfläche (29) des Betätigungselements (16) zusammenwirkt, um die Bewegung des Betätigungselements (16) in eine Verstellrichtung (y2) zu begrenzen.

10. Fahrzeugausstattungsvorrichtung nach einem der Ansprüche 3 bis 9, **dadurch gekennzeichnet, dass** die Anschlagfläche (28) und die Kontaktfläche (29) schräg, insbesondere in einem 45 Grad-Winkel, ausgebildet sind, um das Betätigungselement (16) an dem Rahmen (19) zu zentrieren.

11. Fahrzeugausstattungsvorrichtung nach einem der vorangehenden Ansprüche, **dadurch gekennzeichnet, dass** das Betätigungselement (16) mittels einer Verbindung (27) mit dem ersten Endbereich (25) oder mit dem zweiten Endbereich (26) der Feder (18) verbunden ist.

12. Fahrzeugausstattungsvorrichtung nach einem der vorangehenden Ansprüche, **dadurch gekennzeichnet, dass** die Feder (18) in der unbetätigten Position mit einer Vorspannung versehen ist, welche das Betätigungselement (16) entgegen der Betätigungsrichtung (y1) belastet.

13. Fahrzeugausstattungsvorrichtung nach einem der voranstehenden Ansprüche, wobei das Fahrzeugausstattungsvorrichtung eine Kopfstütze (10) oder eine Armlehne eines Fahrzeugsitzes ist.

## Claims

1. Vehicle equipment device of the passenger compartment having an adjustment device, which can be moved between at least one first position and a second position to actuate the adjustment device of the vehicle equipment device by means of an actuating device (15), having an actuating element which can be moved between an unactuated position and an actuated position relative to a housing in opposing adjustment directions (y1, y2) and is loaded into the unactuated position by means of a reset device, wherein an element of the vehicle equipment device that interacts with the actuating element can be displaced with the actuating element, **characterised in that** the reset device comprises at least one spring (18) designed as a spiral spring, having an outer end region (25) and an inner end region (26), and the spring (18) is arranged in a spiral-shape around a central axis (m) designed parallel to the adjustment directions (y1, y2) and inside a plane (E1) designed at an approximate right-angle to the central axis (m), wherein the spring deflection occurs in the adjustment direction parallel to the central axis (m) due to a relative movement of the inner end region (26) relative to the outer end region (25).

2. Vehicle equipment device according to claim 1, **characterised in that** the actuating element (16) is connected to the outer end region (25) or to the inner end region (26) and the respective other end region can be connected to the equipment device.

3. Vehicle equipment device according to one of the preceding claims, **characterised in that** the actuating device (15) has a frame (19) which can be fixed to the equipment device (11), wherein the actuating element (16) can be moved relative to the frame (19) during the movement between the unactuated position and the actuated position.

4. Vehicle equipment device according to claim 3, **characterised in that** the frame (19) comprises a first guide means (32a) and the actuating element (16) comprises a second guide means (32b), which interact when moving between the unactuated position and the actuated position, in order to guide the movement of the actuating element (16).

5. Vehicle equipment device according to claim 3 or 4, **characterised in that** the outer end region (25) forms a ring which can be fixed to the frame (19).

6. Vehicle equipment device according to one of claims 3 to 5, **characterised in that** the outer end region (25) comprises a fastening means (31a) which can be engaged with counterpart fastening means (31b) of the frame (19).

7. Vehicle equipment device according to one of claims 3 to 6, **characterised in that** the frame (19) is designed in a sleeve-shape.

8. Vehicle equipment device according to claim 7, **characterised in that** the frame (19) is designed housing-like, substantially closed over the circumference of a sleeve wall.

9. Vehicle equipment device according to one of claims 3 to 8, **characterised in that** the frame (19) forms an abutment surface (28) which interacts with a contact surface (29) of the actuating element (16), in order to limit the movement of the actuating element (16) in an adjustment direction (y2).

10. Vehicle equipment device according to one of claims 3 to 9, **characterised in that** the abutment surface (28) and the contact surface (29) are designed diagonal, in particular at a 45-degree angle, in order to centre the actuating element (16) on the frame (19).

11. Vehicle equipment device according to one of the preceding claims, **characterised in that** the actuating element (16) is connected to the first end region (25) or to the second end region (26) of the spring (18) by means of a connection (27).

12. Vehicle equipment device according to one of the preceding claims, **characterised in that** the spring (18) is provided with pretension in the unactuated position, said pretension loading the actuating element (16) against the actuating direction (y1).

13. Vehicle equipment device according to one of the preceding claims, wherein the vehicle equipment device is a head support (10) or an armrest of a vehicle seat.

## Revendications

1. Dispositif d'équipement de véhicule destiné à l'habitable d'un véhicule, avec un système de réglage qui peut être déplacé au moyen d'un dispositif d'actionnement (15) pour actionner le système de réglage du dispositif d'équipement de véhicule entre au moins une première position et une deuxième position, avec un élément d'actionnement qui peut être déplacé par rapport à un boîtier entre une position non-actionnée et une position actionnée dans des directions de réglage opposées (y1, y2) et est chargé dans la position non-actionnée au moyen d'un dispositif de rappel, un élément du dispositif d'équipement de véhicule interagissant avec l'élément d'actionnement pouvant être déplacé avec l'élément d'actionnement, **caractérisé en ce que** le dispositif de rappel comprend au moins un ressort (18) configuré comme un ressort hélicoïdal doté d'une zone d'extrémité extérieure (25) et d'une zone d'extrémité intérieure (26) et que ce ressort (18) est disposé en spirale autour d'un axe médian (m) configuré parallèlement aux directions de réglage (y1, y2) à l'intérieur d'un plan (E1) configuré sensiblement perpendiculairement à l'axe médian (m), la déflexion du ressort provoquée par un déplacement relatif de la zone d'extrémité intérieure (26) par rapport à la zone d'extrémité extérieure (25) dans la direction de réglage se produisant parallèlement à l'axe médian (m).

2. Dispositif d'équipement de véhicule selon la revendication 1, **caractérisé en ce que** l'élément d'actionnement (16) est relié à la zone d'extrémité extérieure (25) ou à la zone d'extrémité intérieure (26) et que l'autre zone d'extrémité peut être reliée au dispositif d'équipement.

3. Dispositif d'équipement de véhicule selon une des revendications précédentes, **caractérisé en ce que** le dispositif d'actionnement (15) comporte un cadre (19) qui peut être fixé sur le dispositif d'équipement (11), l'élément d'actionnement (16) pouvant se déplacer entre la position non-actionnée et la position actionnée par rapport au cadre (19) lors du déplacement.

4. Dispositif d'équipement de véhicule selon la revendication 3, **caractérisé en ce que** le cadre (19) comporte des premiers moyens de guidage (32a) et l'élément d'actionnement (16) des deuxièmes moyens de guidage (32b) qui interagissent pendant le déplacement entre la position non-actionnée et la position actionnée pour guider le déplacement de l'élément d'actionnement (16).

5. Dispositif d'équipement de véhicule selon la revendication 3 ou 4, **caractérisé en ce que** la zone d'extrémité extérieure (25) forme un anneau qui peut être fixé sur le cadre (19).

6. Dispositif d'équipement de véhicule selon une des revendications 3 à 5, **caractérisé en ce que** la zone d'extrémité extérieure (25) comporte des moyens de fixation (31a) qui peuvent être mis en prise avec les moyens de fixation homologues (31b) du cadre (19).

7. Dispositif d'équipement de véhicule selon une des revendications 3 à 6, **caractérisé en ce que** le cadre (19) est configuré en forme de manchon.

8. Dispositif d'équipement de véhicule selon la revendication 7, **caractérisé en ce que** le cadre (19) est configuré en forme de boîtier sensiblement clos sur le pourtour d'une paroi de manchon.

9. Dispositif d'équipement de véhicule selon une des revendications 3 à 8, **caractérisé en ce que** le cadre (19) forme une surface de butée (28) qui interagit avec la surface de contact (29) de l'élément d'actionnement (16) pour limiter le déplacement de l'élément d'actionnement (16) dans une direction de réglage (y2).

10. Dispositif d'équipement de véhicule selon une des revendications 3 à 9, **caractérisé en ce que** la surface de butée (28) et la surface de contact (29) sont configurées en biais, en particulier selon un angle de 45 degrés, pour centrer l'élément d'actionnement (16) sur le cadre (19).

11. Dispositif d'équipement de véhicule selon une des revendications précédentes, **caractérisé en ce que** l'élément d'actionnement (16) est relié au moyen d'une liaison (27) à la première zone d'extrémité (25) ou à la deuxième zone d'extrémité (26) du ressort (18).

12. Dispositif d'équipement de véhicule selon une des revendications précédentes, **caractérisé en ce que**, dans la position non-actionnée, le ressort (18) est pourvu d'une précontrainte qui charge l'élément d'actionnement (16) dans la direction opposée à la direction d'actionnement (y1).

13. Dispositif d'équipement de véhicule selon une des revendications précédentes, ce dispositif d'équipement de véhicule étant un appuie-tête (10) ou un accoudoir d'un siège de véhicule.
